(19) Europäisches Patentamt
European Patent Office
Office européen des brevets

(11) Veröffentlichungsnummer: **0 073 972**
**B1**

(12) # EUROPÄISCHE PATENTSCHRIFT

(45) Veröffentlichungstag der Patentschrift: **27.11.85**

(51) Int. Cl.[4]: **C 09 B 63/00,** C 09 B 29/50 // C08K5/53

(21) Anmeldenummer: **82107504.1**

(22) Anmeldetag: **18.08.82**

(54) **Sulfonsäuregruppenhaltiger verlackter Azofarbstoff.**

(30) Priorität: **24.08.81 DE 3133404**

(43) Veröffentlichungstag der Anmeldung: **16.03.83 Patentblatt 83/11**

(45) Bekanntmachung des Hinweises auf die Patenterteilung: **27.11.85 Patentblatt 85/48**

(84) Benannte Vertragsstaaten: **CH DE FR GB IT LI**

(56) Entgegenhaltungen:
**DE - A - 2 616 881**
**FR - A - 2 201 329**
**FR - A - 2 296 669**
**GB - A - 1 353 521**
**US - A - 3 802 836**
**US - A - 4 045 425**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Henning, Georg, Dr., Thorwaldsenstrasse 3, D-6700 Ludwigshafen (DE)**

**EP 0 073 972 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft die Verbindung der Formel

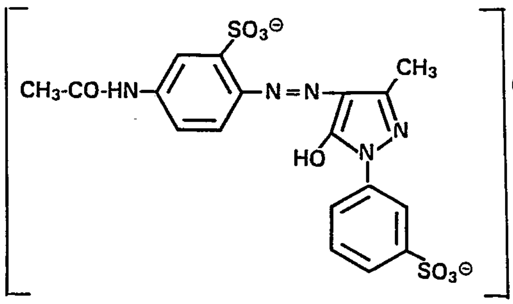

sowie ihre Verwendung zum Färben von Thermoplasten.

Der Farbstoff der Formel I hat Pigmentcharakter, d.h. er ist unlöslich in organischen Lösungsmitteln und schwerlöslich in Wasser. Er zeichnet sich durch sehr gute Lichtechtheit in Kunststoffen, wie Polyolefinen, Polyvinylchlorid, Polystyrol, ABS und in Lakken aus und ist insbesondere für die Kunststoffeinfärbung geeignet. Hervorzuheben sind dabei die gute Weichmacherechtheit und das fehlende Ausblühen sowie die hohe Thermostabilität.

Zur Herstellung der Verbindung der Formel I kann man eine Diazoverbindung des Amins der Formel

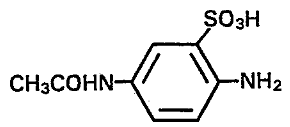

mit der Kupplungskomponente der Formel

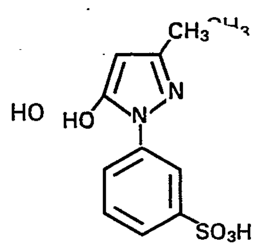

umsetzen und das Reaktionsprodukt in das Calciumsalz überführen.

Einzelheiten der Herstellung können dem Beispiel entnommen werden, in dem sich Angaben über Teile und Prozente, sofern nicht anders vermerkt, auf das Gewicht beziehen.

*Beispiel 1*

92 Teile 5-Acetylamino-2-amino-benzol-1-sulfonsäure werden in 1000 Teilen Wasser mit 25 Volumenteilen einer 50%igen Natronlauge gelöst und mit 80 Volumenteilen konzentrierter Salzsäure versetzt. Mit Eis kühlt man auf eine Temperatur zwischen 0 und 5°C und diazotiert durch Zugabe von 125 Volumenteilen einer 23%igen Natriumnitritlösung.

Zur Kupplung werden 124 Teile 1-(3'-Sulfophenyl)-3-methyl-5-pyrazolon in 1000 Teilen Wasser und 70 Teilen Natriumacetat gelöst. Dann lässt man die Diazoniumsalzsuspension zu der Kupplungslösung fliessen, stellt mit 50%iger Natronlauge einen pH-Wert zwischen 4 und 5 ein. Man lässt eine Stunde nachrühren, verlackt durch Zugabe von 120 Teilen Calciumchlorid, rührt eine weitere Stunde nach, filtriert, wäscht mit Wasser und trocknet. Man erhält 185 Teile eines roten Azofarblacks der Formel:

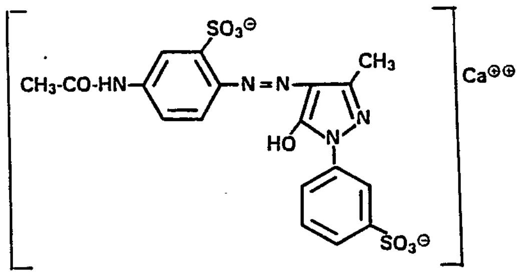

*Beispiel 2*

*Polyäthylen 0,05%ig (transparent)*

0,05 Teile des Farbstoffs erhalten nach Beispiel 1, werden in einem Trommelmischer mit 100 Teilen Polyäthylenpulver (Hochdruckware) trocken gemischt. Das Gemisch wird auf einer Schneckenpresse bei einer Zylindertemperatur von 160 bis 200°C geschmolzen und homogenisiert. Die gefärbte plastische Masse wird durch Heissabschlagen am Düsenkopf oder durch Ausziehen von Fäden unter Kühlung granuliert. Das so erhaltene Granulat wird anschliessend in einer Spritzgussvorrichtung bei 200°C zu Formkörpern verspritzt oder auf Pressen zu beliebigen Körpern gepresst. Man erhält gefärbte Presslinge mit ausgezeichneter Lichtechtheit.

*Beispiel 3*

*Polystyrol 0,05%ig (transparent)*

0,05 Teile des Farbstoffs erhalten nach Beispiel 1, werden in einem Trommelmischer mit 100 Teilen gemahlenem Polystyrol-Blockpolymerisat trocken gemischt. Das Gemisch wird auf einer Schneckenpresse bei einer Zylindertemperatur von 200 bis 250°C geschmolzen und homogenisiert. Die gefärbte plastische Masse wird durch Heissabschlagen am Düsenkopf oder durch Ausziehen von Fäden unter Kühlung granuliert. Das so erhaltene Granulat wird anschliessend in einer Spritzgussvorrichtung bei 200 bis 250°C zu Formkörpern verspritzt oder auf Pressen zu beliebigen Körpern gepresst. Man erhält gelbe, orangefarbene und rote Spritzlinge mit ausgezeichneter Thermostabilität.

Anstelle von Polystyrol-Blockpolymerisat kann auch ein Polystyrol-Emulsionspolymerisat oder Suspensionspolymerisat bzw. Mischpolymerisat mit Butadien und Acrylnitril oder Acrylestern verwendet werden.

**Patentansprüche**

1. Die Verbindung der Formel

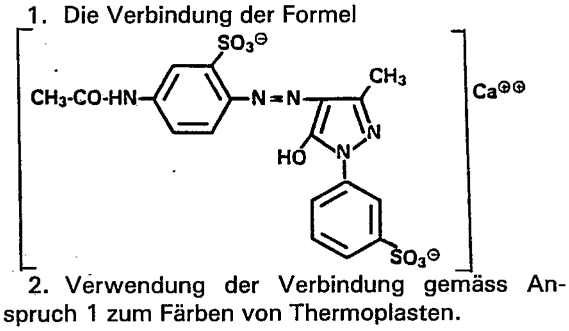

2. Verwendung der Verbindung gemäss Anspruch 1 zum Färben von Thermoplasten.

## Claims

1. The compound of the formula

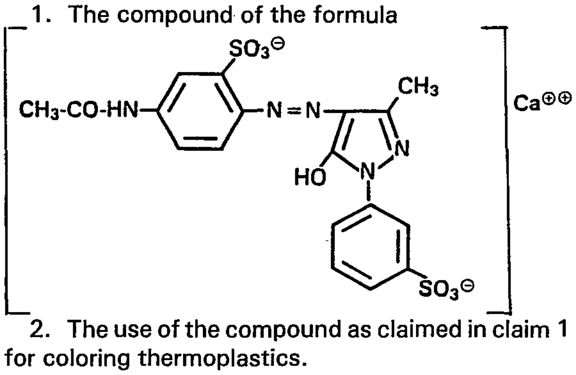

2. The use of the compound as claimed in claim 1 for coloring thermoplastics.

## Revendications

1. Composé de formule

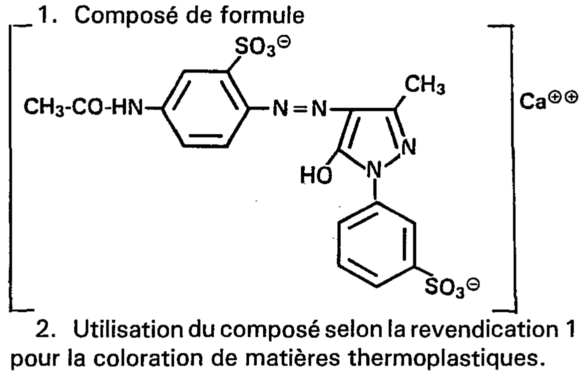

2. Utilisation du composé selon la revendication 1 pour la coloration de matières thermoplastiques.